# EUROPÄISCHE PATENTSCHRIFT

(11) **EP 3 212 452 B1**
(45) Veröffentlichungstag und Bekanntmachung des Hinweises auf die Patenterteilung: **04.09.2019**
(21) Anmeldenummer: 15787990.9
(22) Anmeldetag: 29.10.2015
(51) Int. Cl.: B60K 23/08

(54) **VERFAHREN ZUM BETREIBEN EINER MEHRACHSANTRIEBSEINRICHTUNG SOWIE ENTSPRECHENDE MEHRACHSANTRIEBSEINRICHTUNG**
METHOD FOR OPERATING A MULTI-AXLE DRIVE DEVICE AND CORRESPONDING MULTI-AXLE DRIVE DEVICE
PROCÉDÉ POUR FAIRE FONCTIONNER UN DISPOSITIF D'ENTRAÎNEMENT À PLUSIEURS AXES AINSI QUE DISPOSITIF D'ENTRAÎNEMENT À PLUSIEURS AXES CORRESPONDANT

(30) Priorität: 29.10.2014 DE 102014016078
(43) Veröffentlichungstag der Anmeldung: 06.09.2017
(73) Patentinhaber: Audi AG, 85045 Ingolstadt (DE)
(72) Erfinder: WEIDEMANN, Dieter, 85134 Stammham (DE); HANICKEL, Heiko, 85110 Kipfenberg (DE); KOLB, Florian, 85049 Ingolstadt (DE); BRÜHL, Hans Jörg, 85092 Kösching (DE)
(74) Vertreter: Lehle, Josef
(86) Internationale Anmeldenummer: PCT/EP2015/075066
(87) Internationale Veröffentlichungsnummer: WO 2016/066731

(56) Entgegenhaltungen:
- WO-A2-2014/166819
- DE-A1-102009 005 378
- US-A1- 2014 136 062

## Beschreibung

Die Erfindung betrifft ein Verfahren zum Betreiben einer Mehrachsantriebseinrichtung, wobei die Mehrachsantriebseinrichtung eine in einer Wirkverbindung zwischen einer ersten Abtriebswelle und einer Verbindungswelle vorliegende Synchronisierungskupplung und zumindest eine in einer Wirkverbindung zwischen der Verbindungswelle und einer zweiten Abtriebswelle vorliegende Trennkupplung aufweist, und wobei die Synchronisierungskupplung sowie die Trennkupplung in einem ersten Betriebszustand geöffnet und in einem zweiten Betriebszustand geschlossen sind, wobei bei einem beabsichtigten Wechsel von dem zweiten Betriebszustand in den ersten Betriebszustand die Synchronisierungskupplung wenigstens teilweise geöffnet sowie die Trennkupplung geschlossen gehalten wird. Die Erfindung betrifft weiterhin eine Mehrachsantriebseinrichtung.

Die Mehrachsantriebseinrichtung kann beispielsweise für ein Kraftfahrzeug verwendet werden und insbesondere Bestandteil des Kraftfahrzeugs sein. Die Mehrachsantriebseinrichtung ermöglicht das Antreiben mehrerer Achsen, beispielsweise einer ersten Achse, insbesondere einer Vorderachse, und einer zweiten Achse, insbesondere einer Hinterachse, des Kraftfahrzeugs. Eine Wirkverbindung zwischen den Achsen des Kraftfahrzeugs wird dabei über die Verbindungswelle hergestellt. Die Verbindungswelle kann als Kardanwelle ausgestaltet sein. Häufig ist es wünschenswert, dass mittels der Mehrachsantriebseinrichtung lediglich zeitweise ein Mehrachsbetrieb durchgeführt wird, während welchem tatsächlich mehrere der Achsen angetrieben werden. Im Falle des Kraftfahrzeugs ist dies beispielsweise nur dann notwendig, wenn die Traktion bei einem Antreiben nur einer der Achsen zu gering wäre und/oder falls eine zu starke Querbeschleunigung auftritt. Häufig ist es daher sinnvoll, mittels der Mehrachsantriebseinrichtung lediglich eine der Achsen anzutreiben.

Aus der Druckschrift US 2014/0136062 A1 ist ein Vierradfahrzeug bekannt, bei welchem bei einem Umschalten aus einem Vierradbetrieb in einen Zweiradbetrieb die Stromstärke eines an einer Magnetspule anliegenden elektrischen Stroms kontinuierlich reduziert wird, um ein auf eine Welle wirkendes Drehmoment und die daraus resultierende Torsion zu reduzieren. Anschließend wird eine Trennkupplung geöffnet.

Es ist nun Aufgabe der Erfindung, ein Verfahren zum Betreiben einer Mehrachsantriebseinrichtung vorzuschlagen, welches gegenüber dem Stand der Technik Vorteile aufweist, insbesondere ein unnötiges Umschalten zwischen dem ersten Betriebszustand und dem zweiten Betriebszustand sowie umgekehrt unterbindet.

Dies wird erfindungsgemäß mit dem Verfahren mit den Merkmalen des Anspruchs 1 erreicht. Dabei ist vorgesehen, dass anschließend bei Durchführung einer ersten Betriebsart die Trennkupplung geöffnet und bei Durchführung einer zweiten Betriebsart die Synchronisierungskupplung wieder geschlossen wird, wobei die erste Betriebsart durchgeführt wird, wenn der Wert einer Traktionsgröße oder einer Fahrdynamikgröße gleich einem Schwellenwert ist oder ihn übersteigt, und die zweite Betriebsart durchgeführt wird, wenn der Wert der Traktionsgröße kleiner als der Schwellenwert ist. Grundsätzlich ist vorgesehen, dass bei einem beabsichtigten Wechsel von dem zweiten Betriebszustand in den ersten Betriebszustand die Synchronisierungskupplung wenigstens teilweise geöffnet sowie die Trennkupplung geschlossen gehalten wird, wobei anschließend bei Durchführung einer ersten Betriebsart die Trennkupplung geöffnet und bei Durchführung einer zweiten Betriebsart die Synchronisierungskupplung wieder geschlossen wird.

Die Mehrachsantriebseinrichtung ermöglicht wahlweise das Antreiben lediglich einer Achse oder mehrerer Achsen, insbesondere aller Achsen. Entsprechend weist die Mehrachsantriebseinrichtung wenigstens eine Kupplung auf, um die zweite Achse von der ersten Achse beziehungsweise die zweite Abtriebswelle von der ersten Abtriebswelle zu entkoppeln. Um die bewegte Masse der Mehrachsantriebseinrichtung so gering wie möglich zu halten und entsprechend die daraus resultierenden Verluste zu vermeiden, soll die Verbindungswelle nicht angetrieben werden, wenn nicht alle der Achsen angetrieben werden, insbesondere lediglich eine der Achsen angetrieben wird. Entsprechend sind mehrere Kupplungen vorgesehen.

Im Rahmen der hier vorgestellten Mehrachsantriebseinrichtungen sind zumindest die Synchronisierungskupplung sowie die Trennkupplung vorhanden. Die Synchronisierungskupplung liegt in der Wirkverbindung zwischen der ersten Abtriebswelle und der Verbindungswelle vor. Die erste Abtriebswelle entspricht dabei vorzugsweise einer der Achsen. Im Falle des Kraftfahrzeugs steht die erste Abtriebswelle unmittelbar, also nicht über die Synchronisierungskupplung und/oder die Trennkupplung, in Wirkverbindung mit einem Antriebsaggregat des Kraftfahrzeugs. In der Wirkverbindung kann dabei ein Getriebe, vorzugsweise ein Schaltgetriebe, ein Differenzialgetriebe, insbesondere ein Achsdifferenzialgetriebe, und/oder eine Anfahrkupplung vorgesehen sein. Die Verbindungswelle ist dagegen lediglich mittelbar mit dem Antriebsaggregat wirkverbindbar, nämlich über die Synchronisierungskupplung.

Die Synchronisierungskupplung kann grundsätzlich beliebig ausgestaltet sein, vorzugsweise ermöglicht sie jedoch das stufenlose oder diskrete Einstellen eines bestimmten Synchronisierungsdrehmoments zwischen der ersten Abtriebswelle und der Verbindungswelle. Die Trennkupplung ist besonders bevorzugt als Formschlusskupplung, insbesondere als Klauenkupplung, ausgeführt und kann insoweit wahlweise entweder vollständig geöffnet oder vollständig geschlossen sein. Sie kennt entsprechend keine Zwischenstellungen, in welchen lediglich ein Teil des Drehmoments zwischen der Verbindungswelle und der zweiten Abtriebswelle übertragen wird.

Über die Verbindungswelle ist die zweite Abtriebswelle mit der ersten Abtriebswelle koppelbar beziehungsweise wirkverbindbar. Die zweite Abtriebswelle entspricht vorzugsweise der zweiten Achse des Kraftfahrzeugs oder zumindest einem Teil davon. Beispielsweise ist die zweite Abtriebswelle einem Rad des Kraftfahrzeugs zugeordnet. Die zweite Abtriebswelle ist - analog zu der Verbindungswelle - lediglich mittelbar mit dem Antriebsaggregat des Kraftfahrzeugs wirkverbindbar, nämlich über die Synchronisierungskupplung und die Trennkupplung.

Im Falle des Kraftfahrzeugs sind beispielsweise der zweiten Achse mehrere, insbesondere zwei, zweite Abtriebswellen zugeordnet. Dabei kann es vorgesehen sein, dass die Verbindungswelle auf ihrer der Synchronisierungskupplung abgewandten Seite an ein Differentialgetriebe, insbesondere ein Achsdifferentialgetriebe, angeschlossen ist und insoweit als Eingangswelle für dieses vorliegt. An die beiden Ausgangswellen des Differentialgetriebes ist nun jeweils eine zweite Abtriebswelle über eine Trennkupplung angeschlossen, wobei an jeder zweiten Abtriebswelle ein Rad des Kraftfahrzeugs auf der dem Differentialgetriebe abgewandten Seite der Trennkupplung vorgesehen ist. Alternativ kann selbstverständlich auch vorgesehen sein, dass die beiden zweiten Abtriebswellen unmittelbar an das Differentialgetriebe angeschlossen sind, welches wiederum über die Trennkupplung mit der Verbindungswelle in Verbindung steht beziehungsweise wirkverbindbar ist.

Die Mehrachsantriebseinrichtung kann zumindest in dem ersten Betriebszustand und in dem zweiten Betriebszustand vorliegen. In dem ersten Betriebszustand sind sowohl die Synchronisierungskupplung als auch die Trennkupplung vollständig geöffnet, sodass kein Drehmoment übertragen wird. Entsprechend ist die Verbindungswelle sowohl von der ersten Abtriebswelle als auch von der zweiten Abtriebswelle vollständig entkoppelt, sodass sie nicht angetrieben ist und sich vorzugsweise im Stillstand befindet. Dies gilt vorzugsweise bei der vorstehend beschriebenen Ausgestaltung, welche das Differentialgetriebe aufweist, ebenfalls für dieses. Die Verbindungswelle und/oder das Differentialgetriebe müssen insoweit nicht mitgeschleppt werden, sodass in dem ersten Betriebszustand die dafür ansonsten aufzuwendende Energie eingespart wird. In dem zweiten Betriebszustand sind dagegen sowohl die Synchronisierungskupplung als auch die Trennkupplung wenigstens teilweise, insbesondere vollständig, geschlossen, sodass sich ein an der ersten Abtriebswelle anliegendes Antriebsmoment, beispielsweise gleichmäßig, auf die erste Abtriebswelle und die zweite Abtriebswelle verteilt.

Bei einem beabsichtigten Wechsel von dem zweiten Betriebszustand in den ersten Betriebszustand soll nun die Synchronisierungskupplung wenigstens teilweise geöffnet sowie die Trennkupplung geschlossen gehalten werden, wobei anschließend bei Durchführung einer ersten Betriebsart die Trennkupplung geöffnet und bei Durchführung einer zweiten Betriebsart die Synchronisierungskupplung wieder geschlossen wird. Es ist also vorgesehen, ein Umschalten von dem zweiten Betriebszustand auf den ersten Betriebszustand zunächst nicht vollständig durchzuführen, sondern zunächst die Synchronisierungskupplung lediglich teilweise zu öffnen, wobei die Verbindungswelle weiterhin über die Trennkupplung mit der zweiten Abtriebswelle gekoppelt ist.

Es wird insoweit ein mehrstufiges, insbesondere zweistufiges Verfahren vorgeschlagen, bei welchem zunächst durch das teilweise Öffnen der Synchronisierungskupplung der Anteil des auf die erste Abtriebswelle übertragenen Drehmoments vergrößert und des auf die zweite Abtriebswelle übertragenen Drehmoments verkleinert wird. Vorzugsweise wird die Synchronisierungskupplung dabei derart eingestellt, dass, insbesondere bei Bedarf, weiterhin zumindest ein Teil des Drehmoments von der ersten Abtriebswelle an die Verbindungswelle übertragen wird, beispielsweise mindestens 5 %, mindestens 10 %, mindestens 15 %, mindestens 20 %, mindestens 25 %, mindestens 30 %, mindestens 40 % oder mindestens 45 %. Alternativ kann selbstverständlich die Synchronisierungskupplung so eingestellt werden, dass kein Drehmoment von der ersten Abtriebswelle an die Verbindungswelle übertragen wird, eine Wirkverbindung zwischen diesen also unterbrochen ist.

Vorzugsweise soll dabei jedoch stets der Anteil des an die zweite Abtriebswelle beziehungsweise die Verbindungswelle übertragenen Drehmoments kleiner als 50 % sein, sodass insoweit das an der ersten Abtriebswelle liegende Drehmoment größer ist als das an der zweiten Abtriebswelle anliegende. Dabei kann jedoch - wie vorstehend bereits angedeutet - das von der ersten Abtriebswelle auf die Verbindungswelle übertragene Drehmoment größer als Null, die Synchronisierungskupplung also nicht vollständig geöffnet sein. Alternativ kann das von der ersten Abtriebswelle auf die Verbindungswelle übertragene Drehmoment gleich Null sein.

Anschließend wird entschieden, ob die erste Betriebsart oder die zweite Betriebsart durchgeführt wird. Das Durchführen der ersten Betriebsart oder der zweiten Betriebsart erfolgt vorzugsweise unmittelbar anschließend an das, beispielsweise teilweise, Öffnen der Synchronisierungskupplung beziehungsweise nach Ablauf einer bestimmten Wartezeit, welche zum Zeitpunkt des Öffnens beziehungsweise unmittelbar nach diesem beginnt. In der ersten Betriebsart wird die Trennkupplung geöffnet. Vorzugsweise wird zusätzlich die Synchronisierungskupplung weiter geöffnet, insbesondere vollständig geöffnet, falls dies noch nicht der Fall gewesen sein sollte. In der zweiten Betriebsart wird dagegen die Synchronisierungskupplung wieder geschlossen. Dies erfolgt insbesondere ohne vorheriges Öffnen der Trennkupplung, also ohne Öffnen der Trennkupplung zwischen dem teilweisen Öffnen der Synchronisierungskupplung und ihrem Schließen. Vorzugsweise wird die Synchronisierungskupplung in der zweiten Betriebsart vollständig geschlossen.

Mithilfe eines derartigen Vorgehens beziehungsweise eines derartigen mehrstufigen Verfahrens bei dem beabsichtigten Wechsel von dem zweiten Betriebszustand in den ersten Betriebszustand wird ein unnötiges Wechseln zwischen den Betriebszuständen vermieden. Ohne diese Vorgehensweise kann unter Umständen erst nach dem vollständigen Umschalten aus dem zweiten Betriebszustand in den ersten Betriebszustand festgestellt werden, dass ein zufriedenstellender Fahrbetrieb nicht möglich ist, beispielsweise weil ohne Mehrachsantrieb keine ausreichende Traktion auf dem momentanen Untergrund gegeben ist. Entsprechend muss unmittelbar nach dem Wechsel von dem zweiten Betriebszustand in den ersten Betriebszustand wieder in den zweiten Betriebszustand gewechselt werden, was zum einen Zeit kostet, während welcher kein oder zumindest kein ausreichender Vortrieb zur Verfügung steht, und/oder zum anderen Komforteinbußen für einen Fahrer des Kraftfahrzeugs vorliegen.

In einer bevorzugten Ausgestaltung der Erfindung ist vorgesehen, dass die erste Betriebsart durchgeführt wird, wenn der Wert einer Traktionsgröße oder einer Fahrdynamikgröße gleich einem Schwellenwert ist oder ihn übersteigt. Wie vorstehend bereits angedeutet, kann im Falle ausreichender Traktion vollständig in den ersten Betriebszustand gewechselt werden, indem durch das Durchführen der ersten Betriebsart die Trennkupplung geöffnet wird. Entsprechend wird die Traktionsgröße bestimmt, insbesondere nach dem wenigstens teilweisen Öffnen der Synchronisierungskupplung, jedoch vor dem Durchführen der ersten Betriebsart oder der zweiten Betriebsart.

Die Traktionsgröße ist beispielsweise die Traktion, die an der ersten Abtriebswelle zugeordneten beziehungsweise an dieser angeordneten Rädern festgestellt wird. Das bedeutet, dass nach dem teilweisen Öffnen der Synchronisierungskupplung die Traktion derjenigen Räder festgestellt wird, die der ersten Abtriebswelle zugeordnet beziehungsweise mit ihr wirkverbunden sind. Als Fahrdynamikgröße wird beispielsweise eine Beschleunigung, insbesondere eine Längsbeschleunigung und/oder eine Querbeschleunigung, herangezogen.

Die Traktionsgröße entspricht beispielsweise der Traktion oder wird zumindest aus ihr bestimmt. Beispielsweise ist die Traktionsgröße der Mittelwert aus der für jedes der Räder der ersten Abtriebswelle festgestellten Traktion. Die Traktionsgröße wird nun mit dem Schwellenwert verglichen. Ist sie gleich dem Schwellenwert oder übersteigt ihn, so wird die erste Betriebsart durchgeführt. Anderenfalls wird vorzugsweise die zweite Betriebsart durchgeführt, also die Synchronisierungskupplung, insbesondere ohne vorheriges Öffnen der Trennkupplung, wieder geschlossen.

Eine Weiterbildung der Erfindung sieht vor, dass die zweite Betriebsart durchgeführt wird, wenn der Wert der Traktionsgröße kleiner als der Schwellenwert ist. Auf diese Vorgehensweise wurde vorstehend bereits eingegangen.

Eine weitere Ausgestaltung der Erfindung sieht vor, dass als Traktionsgröße wenigstens eine Zustandsgröße eines Kraftfahrzeugs verwendet wird. Grundsätzlich kann als Traktionsgröße jede beliebige Größe herangezogen werden, welche mit der tatsächlich vorliegenden Traktion korreliert. Vorzugsweise ist dies die Zustandsgröße des Kraftfahrzeugs.

Besonders bevorzugt ist eine Ausgestaltung der Erfindung, gemäß welcher als Traktions- und/oder Zustandsgröße eine Querbeschleunigung, ein Radschlupf und/oder eine Gierrate verwendet werden, oder dass die Traktions- und/oder Zustandsgröße aus dieser/diesen berechnet wird. Jede der genannten Größen oder mehrere, insbesondere alle, der genannten Größen liefern einen Hinweis auf die vorliegende Traktion und können insoweit einzeln oder in Kombination als Traktionsgröße beziehungsweise als Zustandsgröße herangezogen werden. Beispielsweise liegt die Traktionsgröße als Funktion aus wenigstens einer der Größen, insbesondere mehrerer der Größen, vorzugsweise aller Größen, vor. Sie kann insoweit mithilfe einer mathematischen Beziehung, einer Tabelle und/oder einem Kennfeld aus der Größe beziehungsweise den Größen ermittelt werden.

In einer weiteren Ausgestaltung der Erfindung ist vorgesehen, dass als Traktions- und/oder Zustandsgröße ein Maximalwert der Querbeschleunigung, des Radschlupfs und/oder der Gierrate seit dem letzten Öffnen der Trennkupplung verwendet wird. Insoweit findet eine Historie der Größe beziehungsweise der Größen Verwendung, weil diese insbesondere einen Hinweis auf eine Fahrweise des Fahrers des Kraftfahrzeugs gibt.

Anhand der Größe kann insoweit auf die Wahrscheinlichkeit geschlossen werden, mit welcher unmittelbar nach einem Wechseln aus dem zweiten Betriebszustand in den ersten Betriebszustand ein Wechsel in die umgekehrte Richtung notwendig wäre. Diese soll gemäß den vorstehenden Ausführungen verhindert werden. Überschreitet mithin der Maximalwert und entsprechend die Wahrscheinlichkeit des unmittelbaren Zurückwechselns einen Schwellenwert, so wird die zweite Betriebsart durchgeführt, ansonsten die erste Betriebsart. Der Maximalwert der Größe beziehungsweise die Maximalwerte der Größen sind insoweit als Kehrwert der Traktionsgröße anzusehen.

In einer weiteren Ausgestaltung der Erfindung ist vorgesehen, dass nach dem wenigstens teilweisen Öffnen der Synchronisierungskupplung eine Wartezeit abgewartet wird, bevor eine der Betriebsarten durchgeführt wird. Dies wurde vorstehend bereits angedeutet. Die Wartezeit dient insbesondere dazu, ein sicheres Einschwingen der Mehrachsantriebseinrichtung zu ermöglichen. Im Idealfall wird auf diese Art und Weise ein stationärer beziehungsweise ein quasi stationärer Zustand erzielt, in welchem die Auswertung der Traktionsgröße beziehungsweise deren Bestimmung auf besonders zuverlässige Art und Weise erfolgen kann.

Eine bevorzugte Ausgestaltung der Erfindung sieht vor, dass die Wartezeit in Abhängigkeit von der wenigstens einen Traktions- und/oder Zustandsgröße gewählt wird. Beispielsweise wird die Traktions- und/oder Zustandsgröße kontinuierlich oder in Intervallen beginnend ab dem teilweisen Öffnen der Synchronisierungskupplung ermittelt, also bereits vor Ablauf der Wartezeit. Entsprechend kann anhand der bestimmten Größe darauf geschlossen werden, ob diese bereits eine zuverlässige Entscheidung ermöglicht, ob die erste Betriebsart oder die zweite Betriebsart durchgeführt werden soll. Alternativ oder zusätzlich kann es auch vorgesehen sein, zunächst eine bestimmte, festgelegte Wartezeit abzuwarten und erst anschließend die Traktions- und/oder Zustandsgröße zu bestimmen. Anhand dieser bestimmten Größe wird anschließend entschieden, ob die Wartezeit verlängert wird, beispielsweise falls sie einen bestimmten Schwellenwert unterschreitet.

In einer weiteren Ausgestaltung kann es vorgesehen sein, dass die Traktions- und/oder Zustandsgröße mehrfach, nämlich in bestimmten Zeitabständen, ermittelt wird. Jedes Mal wird die Größe mit dem Schwellenwert verglichen. Lediglich wenn der Wert der Größe den Schwellenwert mehrfach erreicht oder übersteigt, wird die erste Betriebsart durchgeführt. Ansonsten wird im Rahmen der zweiten Betriebsart die Synchronisierungskupplung wieder geschlossen.

Schließlich kann in einer weiteren Ausgestaltung der Erfindung vorgesehen sein, dass die Wartezeit vorzeitig beendet wird, sobald der Wert der Traktionsgröße gleich einem zweiten Schwellenwert ist oder ihn übersteigt. Der zweite Schwellenwert kann dem vorstehend erläuterten Schwellenwert entsprechen, jedoch auch kleiner oder größer sein als dieser. Besonders bevorzugt ist der zweite Schwellenwert größer als der erläuterte Schwellenwert. Durch das vorzeitige Beenden der Wartezeit kann die Zeitspanne, welche zwischen dem teilweisen Öffnen der Synchronisierungskupplung und Durchführung entweder der ersten Betriebsart oder der zweiten Betriebsart liegt, deutlich verkürzt werden. Die beschriebene Vorgehensweise führt insoweit dazu, dass bereits vollständig in die erste Betriebsart gewechselt wird, sobald mit hoher Wahrscheinlichkeit feststeht, dass auch nach diesem Wechsel eine ausreichende Traktion gegeben ist.

Die Erfindung betrifft weiterhin eine Mehrachsantriebseinrichtung, insbesondere zur Durchführung des vorstehend beschriebenen Verfahrens, wobei die Mehrachsantriebseinrichtung eine in einer Wirkverbindung zwischen einer ersten Abtriebswelle und einer Verbindungswelle vorliegende Synchronisierungskupplung und zumindest eine in einer Wirkverbindung zwischen der Verbindungswelle und einer zweiten Abtriebswelle vorliegende Trennkupplung aufweist, und wobei die Synchronisierungskupplung sowie die Trennkupplung in einem ersten Betriebszustand geöffnet und in einem zweiten Betriebszustand geschlossen sind. Dabei ist vorgesehen, dass die Mehrachsantriebseinrichtung dazu ausgebildet ist, bei einem beabsichtigten Wechsel von dem zweiten Betriebszustand in den ersten Betriebszustand die Synchronisierungskupplung wenigstens teilweise zu öffnen sowie die Trennkupplung geschlossen zu halten, wobei anschließend bei Durchführung einer ersten Betriebsart die Trennkupplung geöffnet und bei Durchführung einer zweiten Betriebsart die Synchronisierungskupplung wieder geschlossen wird. Weiterhin ist vorgesehen, dass die erste Betriebsart durchgeführt wird, wenn der Wert einer Traktionsgröße oder einer Fahrdynamikgröße gleich einem Schwellenwert ist oder ihn übersteigt, und die zweite Betriebsart durchgeführt wird, wenn der Wert der Traktionsgröße kleiner als der Schwellenwert ist.

Auf die Vorteile einer derartigen Ausgestaltung der Mehrachsantriebseinrichtung beziehungsweise der entsprechenden Vorgehensweise wurde bereits hingewiesen. Sowohl die Mehrachsantriebseinrichtung als auch das Verfahren können gemäß den vorstehenden Ausführungen weitergebildet sein, sodass insoweit auf diese verwiesen wird.

Selbstverständlich ist die Erfindung auch auf ein Kraftfahrzeug mit einer derartigen Mehrachsantriebseinrichtung gerichtet, wobei auch hier die Mehrachsantriebseinrichtung gemäß den vorstehenden Ausführungen weitergebildet sein kann.

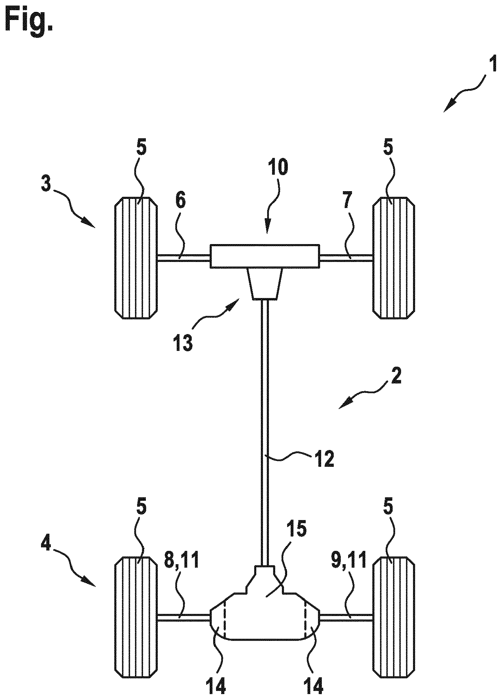

Die Erfindung wird nachfolgend anhand der in der Zeichnung dargestellten Ausführungsbeispiele näher erläutert, ohne dass eine Beschränkung der Erfindung erfolgt. Dabei zeigt die einzige
Figur eine schematische Darstellung eines Antriebsstrangs eines Kraftfahrzeugs, welche eine Mehrachsantriebseinrichtung aufweist.

Die Figur zeigt einen Antriebsstrang 1 für ein nicht weiter dargestelltes Kraftfahrzeug. Der Antriebsstrang 1 verfügt über eine Mehrachsantriebseinrichtung 2, welche zum wahlweisen Betreiben nur einer ersten Achse 3 oder der ersten Achse 3 sowie einer zweiten Achse 4 dient.
Jede der Achsen 3 und 4 verfügt in dem hier dargestellten Ausführungsbeispiel über zwei Räder 5, die an Teilachsen 6 und 7 der ersten Achse 3 und Teilachsen 8 und 9 der zweiten Achse 4 angeordnet sind. Es kann nun vorgesehen sein, dass die Teilachsen 6 und 7 der ersten Achse 3 eine erste Abtriebswelle 10 bilden. Besonders bevorzugt sind sie jedoch über ein Differentialgetriebe, insbesondere ein Achsdifferentialgetriebe, an die erste Abtriebswelle 10 angeschlossen, also insbesondere starr und/oder permanent mit ihr wirkverbunden. Die Teilachsen 8 und 9 können jeweils als eine zweite Abtriebswelle 11 vorliegen. Alternativ kann es vorgesehen sein, dass die Teilachsen 8 und 9 über ein Differentialgetriebe, insbesondere ein Achsdifferentialgetriebe, an die zweite Abtriebswelle 11 angeschlossen sind.

Die Mehrachsantriebseinrichtung 2 verfügt über eine Verbindungswelle 12, über welche eine Wirkverbindung zwischen der ersten Achse 3 und der zweiten Achse 4 hergestellt werden kann. Die Verbindungswelle 12 liegt beispielsweise als Kardanwelle vor. In einer Wirkverbindung zwischen der ersten Abtriebswelle 10 und der Verbindungswelle 12 ist eine Synchronisierungskupplung 13 angeordnet. Die Synchronisierungskupplung 13 ist vorzugsweise als kraftschlüssige Kupplung ausgestaltet. Sie ermöglicht insbesondere das Übertragen eines beliebigen Anteils des anliegenden Drehmoments. In einer Wirkverbindung zwischen der Verbindungswelle 12 und der zweiten Abtriebswelle 11 ist zudem eine Trennkupplung 14 angeordnet. In dem hier dargestellten Ausführungsbeispiel liegen insoweit zwei Trennkupplungen 14 vor, wobei jeweils eine der Trennkupplungen 14 zwischen einem Differentialgetriebe 15 und einer der beiden Abtriebswellen 11 beziehungsweise den Teilachsen 8 und 9 angeordnet ist.

Die Verbindungswelle 12 ist dabei starr und/oder permanent mit dem Differentialgetriebe 15 wirkverbunden. Die Wirkverbindung zwischen dem Differentialgetriebe 15 und mithin der Verbindungswelle 12 einerseits sowie den zweiten Abtriebswellen 11 in Form der Teilachsen 8 und 9 andererseits kann mithilfe der Trennkupplung 14 wahlweise hergestellt oder unterbrochen sein. Vorzugsweise befinden sich die Trennkupplungen 14 stets in der gleichen Stellung, sodass entweder eine Wirkverbindung zwischen der Verbindungswelle 12 einerseits und den Teilachsen 8 und 9 andererseits hergestellt oder unterbrochen ist.

In einem ersten Betriebszustand der Mehrachsantriebseinrichtung 2 sind die Synchronisierungskupplung 13 und die Trennkupplung 14 geöffnet, sodass die Wirkverbindung zwischen der ersten Abtriebswelle 10 und der zweiten Abtriebswelle 11 unterbrochen ist. Insoweit nachfolgend lediglich von einer Trennkupplung 14 oder einer zweiten Abtriebswelle 11 die Rede ist, so sind im Rahmen des vorliegenden Ausführungsbeispiels stets beide Abtriebswellen 11 beziehungsweise beide Trennkupplungen 14 gemeint. In einem zweiten Betriebszustand sind die Synchronisierungskupplung 13 und die Trennkupplung 14 vollständig geschlossen. Die Trennkupplung 14 ist bevorzugt als Formschlusskupplung, insbesondere als Klauenkupplung, ausgeführt.

Es ist nun vorgesehen, dass bei einem beabsichtigten Wechsel von dem zweiten Betriebszustand in den ersten Betriebszustand die Synchronisierungskupplung 13 wenigstens teilweise geöffnet sowie die Trennkupplung 14 geschlossen gehalten wird. Vorzugsweise wird die Synchronisierungskupplung lediglich teilweise geöffnet, sodass weiterhin ein Drehmoment zwischen der ersten Abtriebswelle 10 und der Verbindungswelle 12 beziehungsweise der zweiten Abtriebswelle 11 übertragen wird. Gleichzeitig bleibt die Trennkupplung 14 geschlossen. Anschließend wird eine Traktionsgröße bestimmt und mit einem Schwellenwert verglichen. Übersteigt die Traktionsgröße den Schwellenwert oder entspricht ihm zumindest, so wird eine erste Betriebsart durchgeführt. Anderenfalls wird eine zweite Betriebsart durchgeführt beziehungsweise eingeleitet.

In der ersten Betriebsart wird die Trennkupplung 14 geöffnet. Gleichzeitig wird bevorzugt auch die Synchronisierungskupplung 13 geöffnet, insbesondere vollständig. In der zweiten Betriebsart soll dagegen die Synchronisierungskupplung 13 geschlossen werden, ohne dass zuvor die Trennkupplung 14 geöffnet wurde. Entsprechend wird in der ersten Betriebsart der beabsichtigte Wechsel von dem zweiten Betriebszustand in den ersten Betriebszustand durchgeführt, während er bei der zweiten Betriebsart abgebrochen wird. Mit der erfindungsgemäßen Vorgehensweise ist es entsprechend möglich, ein unnötiges Hin- und Herschalten zwischen den Betriebszuständen zu vermeiden, weil bereits nach dem teilweisen Öffnen der Synchronisierungskupplung 13 entschieden wird, ob der Wechsel in den ersten Betriebszustand vollständig durchgeführt oder aber der Wechsel abgebrochen wird.

## Patentansprüche

1. Verfahren zum Betreiben einer Mehrachsantriebseinrichtung (2), wobei die Mehrachsantriebseinrichtung (2) eine in einer Wirkverbindung zwischen einer ersten Abtriebswelle (10) und einer Verbindungswelle (12) vorliegende Synchronisierungskupplung (13) und zumindest eine in einer Wirkverbindung zwischen der Verbindungswelle (12) und einer zweiten Abtriebswelle (11) vorliegende Trennkupplung (14) aufweist, und wobei die Synchronisierungskupplung (13) sowie die Trennkupplung (14) in einem ersten Betriebszustand geöffnet und in einem zweiten Betriebszustand geschlossen sind, wobei bei einem beabsichtigten Wechsel von dem zweiten Betriebszustand in den ersten Betriebszustand die Synchronisierungskupplung (13) wenigstens teilweise geöffnet sowie die Trennkupplung (14) geschlossen gehalten wird, **dadurch gekennzeichnet, dass** anschließend bei Durchführung einer ersten Betriebsart die Trennkupplung (14) geöffnet und bei Durchführung einer zweiten Betriebsart die Synchronisierungskupplung (13) wieder geschlossen wird, wobei die erste Betriebsart durchgeführt wird, wenn der Wert einer Traktionsgröße oder einer Fahrdynamikgröße gleich einem Schwellenwert ist oder ihn übersteigt, und die zweite Betriebsart durchgeführt wird, wenn der Wert der Traktionsgröße kleiner als der Schwellenwert ist.

2. Verfahren nach Anspruch 1, **dadurch gekennzeichnet, dass** als Traktionsgröße wenigstens eine Zustandsgröße eines Kraftfahrzeugs verwendet wird.

3. Verfahren nach einem der vorhergehenden Ansprüche, **dadurch gekennzeichnet, dass** als Traktions- und/oder Zustandsgröße eine Querbeschleunigung, ein Radschlupf und/oder eine Gierrate verwendet werden, oder dass die Traktions- und/oder Zustandsgröße aus dieser/diesen berechnet wird.

4. Verfahren nach einem der vorhergehenden Ansprüche, **dadurch gekennzeichnet, dass** als Traktions- und/oder Zustandsgröße ein Maximalwert der Querbeschleunigung, des Radschlupfs und/oder der Gierrate seit dem letzten Öffnen der Trennkupplung (14) verwendet wird.

5. Verfahren nach einem der vorhergehenden Ansprüche, **dadurch gekennzeichnet, dass** nach dem wenigstens teilweisen Öffnen der Synchronisierungskupplung (13) eine Wartezeit abgewartet wird, bevor eine der Betriebsarten durchgeführt wird.

6. Verfahren nach Anspruch 5, **dadurch gekennzeichnet, dass** die Wartezeit in Abhängigkeit von der wenigstens einen Traktions- und/oder Zustandsgröße gewählt wird.

7. Verfahren nach Anspruch 5 oder 6, **dadurch gekennzeichnet, dass** die Wartezeit vorzeitig beendet wird, sobald der Wert der Traktionsgröße gleich einem zweiten Schwellenwert ist oder ihn übersteigt.

8. Mehrachsantriebseinrichtung (2) zur Durchführung des Verfahrens nach einem der Ansprüche 1 bis 7, wobei die Mehrachsantriebseinrichtung (2) eine in einer Wirkverbindung zwischen einer ersten Abtriebswelle (10) und einer Verbindungswelle (12) vorliegende Synchronisierungskupplung (13) und zumindest eine in einer Wirkverbindung zwischen der Verbindungswelle (12) und einer zweiten Abtriebswelle (11) vorliegende Trennkupplung (14) aufweist, und wobei die Synchronisierungskupplung (13) sowie die Trennkupplung (14) in einem ersten Betriebszustand geöffnet und in einem zweiten Betriebszustand geschlossen sind, wobei die Mehrachsantriebseinrichtung (2) dazu ausgebildet ist, bei einem beabsichtigten Wechsel von dem zweiten Betriebszustand in den ersten Betriebszustand die Synchronisierungskupplung (13) wenigstens teilweise zu öffnen sowie die Trennkupplung (14) geschlossen zu halten, **dadurch gekennzeichnet, dass** anschließend bei Durchführung einer ersten Betriebsart die Trennkupplung (14) geöffnet und bei Durchführung einer zweiten Betriebsart die Synchronisierungskupplung (13) wieder geschlossen wird, wobei die erste Betriebsart durchgeführt wird, wenn der Wert einer Traktionsgröße oder einer Fahrdynamikgröße gleich einem Schwellenwert ist oder ihn übersteigt, und die zweite Betriebsart durchgeführt wird, wenn der Wert der Traktionsgröße kleiner als der Schwellenwert ist.

## Claims

1. Method for operating a multi-axle drive device (2), wherein the multi-axle drive device (2) has a synchronising clutch (13), which is operatively connected between a first output shaft (10) and a connecting shaft (12) and at least one disconnect clutch (14), which is operatively connected between the connecting shaft (12) and a second output shaft (11), and wherein the synchronising clutch (13) and the disconnect clutch (14) are open in a first operating state and are closed in a second operating state, wherein during a planned change from the second operating state to the first operating state the synchronising clutch (13) is at least partially open and the disconnect clutch (14) is kept closed, **characterised in that** subsequently, when a first operating mode is carried out, the disconnect clutch (14) is opened and when a second operating mode is carried out the synchronising clutch (13) is closed again, wherein the first operating mode is carried out, if the value of a traction variable or a driving dynamics variable is equal to a threshold value or exceeds it, and the second operating mode is carried out, if the value of the traction variable is less than the threshold value.

2. Method according to claim 1, **characterised in that** at least one state variable of a motor vehicle is used as the traction variable.

3. Method according to any one of the preceding claims, **characterised in that** a lateral acceleration, a wheel slip and/or a yaw rate are used as the traction variable and/or state variable or that the traction variable and/or state variable is calculated from this/these.

4. Method according to any one of the preceding claims, **characterised in that** a maximum value of the lateral acceleration, the wheel slip and/or the yaw rate since the last opening of the disconnect clutch (14) is used as the traction variable and/or state variable.

5. Method according to any one of the preceding claims, **characterised in that** after the at least partial opening of the synchronising clutch (13) a waiting period is awaited, before one of the operating modes is carried out.

6. Method according to claim 5, **characterised in that** the waiting period is selected as a function of the at least one traction- and/or state variable.

7. Method according to claim 5 or 6, **characterised in that** the waiting period is ended early, as soon as the value of the traction variable is equal to a second threshold value or exceeds it.

8. Multi-axle drive device (2) for implementing the method according to any one claims 1 to 7, wherein the multi-axle drive device (2) has a synchronising clutch (13), which is operatively connected between a first output shaft (10) and a connecting shaft (12) and at least one disconnect clutch (14), which is operatively connected between the connecting shaft (12) and a second output shaft (11), and wherein the synchronising clutch 13) and the disconnect clutch (14) are opened in a first operating state and are closed in a second operating state, wherein the multi-axle drive device (2) is designed to at least partially open the synchronising clutch (13) during a planned change from the second operating state to the first operating state and to keep the disconnect clutch (14) closed, **characterised in that** subsequently, when a first operating mode is carried out, the disconnect clutch (14) is opened and when a second operating mode is carried out the synchronising clutch (13) is closed again, wherein the first operating mode is carried out, if the value of a traction variable or a driving dynamics variable is equal to a threshold value or exceeds it, and the second operating mode is carried out, if the value of the traction variable is less than the threshold value.

## Revendications

1. Procédé pour faire fonctionner un dispositif de propulsion à plusieurs axes (2), dans lequel le dispositif de propulsion à plusieurs axes (2) présente un embrayage de synchronisation (13) présent dans une liaison active entre un premier arbre de sortie (10) et un arbre de liaison (12) et au moins un embrayage de séparation (14) présent dans une liaison active entre l'arbre de liaison (12) et un deuxième arbre de sortie (11), et dans lequel l'embrayage de synchronisation (13) ainsi que l'embrayage de séparation (14) sont ouverts dans un premier état de fonctionnement et fermés dans un deuxième état de fonctionnement, dans lequel lors d'un changement délibéré du deuxième état de fonctionnement au premier état de fonctionnement, l'embrayage de synchronisation (13) est maintenu au moins partiellement ouvert et l'embrayage de séparation (14) fermé, **caractérisé en ce qu'**ensuite lors de la réalisation d'un premier mode de fonctionnement, l'embrayage de séparation (14) est ouvert et lors de la réalisation d'un deuxième mode de fonctionnement, l'embrayage de synchronisation (13) est à nouveau fermé, dans lequel le premier mode de fonctionnement est réalisé lorsque la valeur d'une grandeur de traction ou d'une grandeur de dynamique de conduite est égale à une valeur seuil ou la dépasse, et le deuxième mode de fonctionnement est réalisé lorsque la valeur de la grandeur de traction est inférieure à la valeur seuil.

2. Procédé selon la revendication 1, **caractérisé en ce qu'**au moins une grandeur d'état d'un véhicule automobile est utilisée en tant que grandeur de traction.

3. Procédé selon l'une quelconque des revendications précédentes, **caractérisé en ce qu'**une accélération transversale, un patinage de roue et/ou un taux de lacet sont utilisés en tant que grandeur de traction et/ou d'état, ou que la grandeur de traction et/ou d'état est calculée à partir de ceux-ci.

4. Procédé selon l'une quelconque des revendications précédentes, **caractérisé en ce qu'**une valeur maximum de l'accélération transversale, du patinage de roue et/ou du taux de lacet depuis la dernière ouverture de l'embrayage de séparation (14) est utilisée en tant que grandeur de traction et/ou d'état.

5. Procédé selon l'une quelconque des revendications précédentes, **caractérisé en ce qu'**après l'ouverture au moins partielle de l'embrayage de synchronisation (13), un temps d'attente est attendu avant qu'un des modes de fonctionnement soit réalisé.

6. Procédé selon la revendication 5, **caractérisé en ce que** le temps d'attente est sélectionné en fonction de l'au moins une grandeur de traction et/ou d'état.

7. Procédé selon la revendication 5 ou 6, **caractérisé en ce que** le temps d'attente est arrêté de manière précoce, dès que la valeur de la grandeur de traction est égale à une deuxième valeur seuil ou la dépasse.

8. Dispositif de propulsion à plusieurs axes (2) pour la réalisation du procédé selon l'une quelconque des revendications 1 à 7, dans lequel le dispositif de propulsion à plusieurs axes (2) présente un embrayage de synchronisation (13) présent dans une liaison active entre un premier arbre de sortie (10) et un arbre de liaison (12) et au moins un embrayage de séparation (14) présent dans une liaison active entre l'arbre de liaison (12) et un deuxième arbre de sortie (11), et dans lequel l'embrayage de synchronisation (13) ainsi que l'embrayage de séparation (14) sont ouverts dans un premier état de fonctionnement et fermés dans un deuxième état de fonctionnement, dans lequel le dispositif de propulsion à plusieurs axes (2) est conçu pour ouvrir lors d'un changement délibéré du deuxième état de fonctionnement au premier état de fonctionnement, l'embrayage de synchronisation (13) au moins partiellement et maintenir l'embrayage de séparation (14) fermé, **caractérisé en ce qu'**ensuite lors de la réalisation d'un premier mode de fonctionnement, l'embrayage de séparation (14) est ouvert et lors de la réalisation d'un deuxième mode de fonctionnement, l'embrayage de synchronisation (13) est à nouveau fermé, dans lequel le premier mode de fonctionnement est réalisé lorsque la valeur d'une grandeur de traction ou d'une grandeur de dynamique de conduite est égale à une valeur seuil ou la dépasse, et le deuxième mode de fonctionnement est réalisé lorsque la valeur de la grandeur de traction est inférieure à la valeur seuil.
